# EUROPEAN PATENT APPLICATION

(11) **EP 2 298 647 A2**
(43) Date of publication of application: **23.03.2011**
(21) Application number: 09757651.6
(22) Date of filing: 03.06.2009
(51) Int. Cl.: B64D 39/06

(54) **SYSTEM FOR PERFORMING REFUELLING OPERATIONS**

(30) Priority: 04.06.2008 ES 200801680
(71) Applicant: EADS Construcciones Aeronauticas, S.A., 28022 Madrid (ES)
(72) Inventor: ADARVE LOZANO, Alberto, E-28906 Getafe, Madrid (ES)
(74) Representative: Elzaburu Marquez, Alberto
(86) International application number: PCT/ES2009/070197
(87) International publication number: WO 2009/147272

(57) **Abstract**

System for hoisting and releasing an aircraft refuelling boom (6) at in flight refuelling operations between a tanker aircraft and a receptor aircraft comprising a linking device (5) connectable to the boom (6), and a lifting and lowering device (14) for operating the linking device (5) and therefore the boom (6) such that, when refuelling operations have to take place, the boom (6) is lowered down by the lifting and lowering device (14), said linking device (5) comprising connecting means (7) able to disconnect the boom (6) from the linking device (5), thereby allowing a free-flying boom refuelling operation, said connecting means (7) being also able to connect said boom (6) to the linking device (5), thereby facilitating the lifting of the boom (6).

## Description

### FIELD OF THE INVENTION

The invention relates generally to a system for hoisting and releasing an aircraft refuelling boom at refuelling operations. The invention also relates to a method for operating such a system.

### BACKGROUND

For in flight refuelling operations, one usual method is based on the use of a boom device for interconnecting a tanker aircraft with a receiver aircraft or receptor in flight, which is basically a telescopic tube attached to the underside of the tanker aircraft by means of an articulation element. At the tanker aircraft, the operator controls visually all steps and procedures for a safe refuelling operation. From the tanker, the operator controls the boom movements to initially place the boom at a nominal position. Then, the receptor aircraft approaches the tanker aircraft, placing itself close to the boom's end. The extensible part of the boom is then extracted and introduced at the receptacle of the receptor aircraft. Once the refuelling operation is finished in a certain session, the boom is hoisted up to its secured position in the tanker aircraft.

In order to allow the connection of the boom in the tanker aircraft to the receptor aircraft, the boom should be placed in such a way that its free movement for the connection to the receptor is allowed. Moreover, for facilitating the later lifting of the boom up to a secured pre-landing or non operating position in the tanker aircraft, a steel cable is usually used to provide a connection between the mid point of the boom and the tanker aircraft and to perform such operation.

These known boom refuelling devices are therefore always connected to the tanker aircraft by means of a steel cable, when the connection to the receptor aircraft is performed and also when the boom must be hoisted to a stowed position. This steel cable is then used to keep the boom linked to the tanker aircraft and to ensure the later lifting of the boom after the refuelling operation has been completed. The problem raised by these devices is that the cable cannot be continuously taut, therefore existing the possibility of this cable being hooked. Moreover, this cable being loose poses an aerodynamic flight distortion.

One possibility is to use a motor for operating the hoisting and releasing movements of the refuelling boom by acting and maintaining the cable taut. The problem is then raised by the necessary motor requirements. The hoist must have a very high driving force and, at the same time, be able to lift the boom at a very high speed. For example, document EP 1361156 discloses an improved boom deploy actuator comprising an electric motor and control circuitry for selectively powering the motor to vary the length of a boom cord, also comprising circuit components for limiting the speed of the motor, which poses a problem for this system.

Moreover, it is very dangerous that the boom flies free in an area close to the airframe of the aircraft during refuelling in flight operations, therefore being necessary to provide a device that allows the lifting of the boom.

The present invention comes to solve the above-mentioned drawbacks.

### SUMMARY OF THE INVENTION

To accomplish these objectives, the present invention provides a system to hoist and release an aircraft refuelling boom when in flight refuelling operations are performed between a tanker aircraft and a receptor aircraft, this system being based on a cable-free flying method. The system comprises a cable, this cable comprising a limit device at one of its ends, and a chain-tubing mechanism, this system providing boom in flight releasing and hoisting operations when refuelling is to be performed. The limit device, placed at one of the ends of the cable, is coupled to connecting means before the boom is being hoisted or lifted to a stowed position. The system according to the invention also provides a device that allows, when the limit device is coupled to the connecting means, the detachment of said limit device from the connecting means in order to permit a free flight boom operation.

The invention also describes a method for operating such a system, based on a cable-free flying method. Therefore, according to the invention, the boom is first positioned at a height near or in the area where the boom is able to fly freely , because of the magnitude of aerodynamic lift and forces compared to other forces such as gravity forces due to its weight. Then, the boom is released from this cable by using the system described before, which allows the boom to freely fly to perform normal refuelling operations. Once the refuelling has been performed, said boom must be taken to its final non operating position, for landing or for taking off.

The features, objects and advantages of the invention will become apparent by reading this description in conjunction with the accompanying drawings.

### BRIEF DESCRIPTION OF DRAWINGS

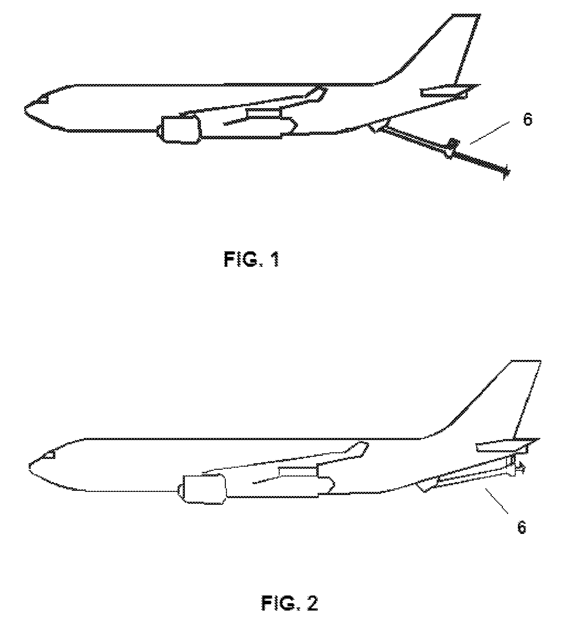

Figure 1 is a schematic view of a released refuelling boom in a tanker aircraft according to the state of the art.
Figure 2 shows a schematic view of a stowed refuelling boom in a tanker aircraft according to the state of the art.
Figure 3 is a schematic view of a first boom positioning using a system according to the invention.
Figure 4 shows a schematic view of the chain-tubing mechanism of the system according to a preferred embodiment of the invention.

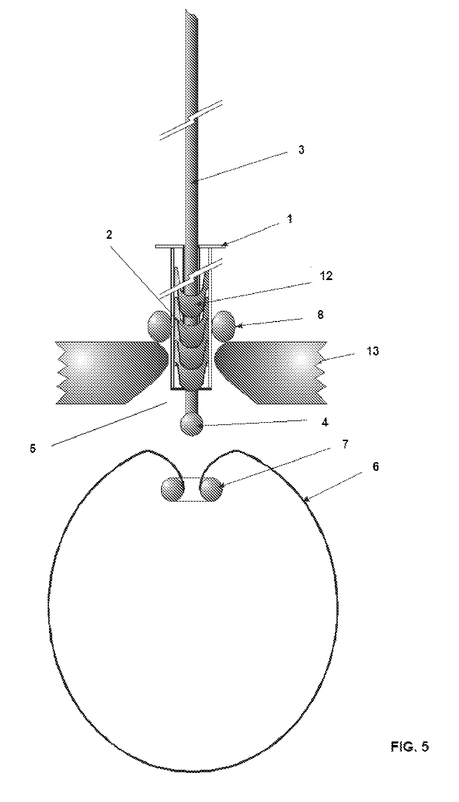

Figure 5 shows a view of the cable, chain and connecting means of the system according to a preferred embodiment of the invention.
Figures 6a and 6b show views of the system according to a preferred embodiment of the invention in an extended position and in a retracted position at rest, respectively.
Figures 7a and 7b show, respectively, lateral and front views of the links forming the chain of the system according to a preferred embodiment of the invention.
Figure 8a shows the bending of the system according to a preferred embodiment of the invention outside the plane comprising the longitudinal axis of the aircraft and the boom.
Figure 8b shows the bending of the system according to a preferred embodiment of the invention in the plane comprising the longitudinal axis of the aircraft and the boom.

### DETAILED DESCRIPTION OF PREFERRED EMBODIMENTS

The present invention provides a system for hoisting and releasing an aircraft refuelling boom at refuelling operations between a tanker aircraft and a receptor aircraft. The system of the invention comprises a linking device 5 connectable to the boom 6, and a lifting and lowering device 14 for operating said linking device 5 and therefore said boom 6 such that, when refuelling operations have to take place, the boom 6 is lowered down by the lifting and lowering device 14. The linking device 5 comprises connecting means 7 able to disconnect the boom 6 from the linking device 5, thereby allowing a free-flying boom refuelling operation. Said connecting means 7 are also able to connect the boom 6 to the linking device 5, thereby facilitating the lifting of said boom 6.

The linking device 5 comprises a cable 3 and a limit device 4 located at one of the ends of said cable 3. The linking device 5 can also comprise a duct 1 through which passes the cable 3. Moreover, said linking device 5 can also comprise a chain 2. When the linking device 5 comprises a cable 3, a limit device 4 and a duct 1, the cable 3 passes through said duct 1. When the linking device 5 comprises a cable 3, a limit device 4, a duct 1 and a chain 2, the duct 1 holds and protects said chain 2, the cable 3 passing through a hole in said chain 2.

The duct 1 is preferably a cylindrical tube, whereas the limit device 4 is preferably a ball. The duct 1 is a protecting duct, preferably being made of plastic, that can hold the chain 2. The material of the duct 1 should be rigid and strong enough to hold the chain 2 and the cable 3 inside it, being also flexible enough in order to allow a certain bending of the whole linking device 5. The chain 2 comprises several links 12, also comprising a hole, preferably cylindrical, inside it to allow the cable 3 passing though it. The bending of the linking device 5 is substantially restricted in the plane comprising the longitudinal axis of the aircraft and the boom 6, for facilitating to be connected to the boom 6, being the bending of said linking device 5 favoured (up to an extent α, for example) outside of said plane for absorbing lateral movements of the boom 6. This rigidity of the whole linking device 5 is necessary for linking in a correct and easy manner the linking device 5, in particular the limit device 4, to the connecting means 7 of the boom 6, these connecting means 7 being preferably a ring.

The cable 3 is preferably a steel cable, comprising at one of its ends a limit device 4. The cable 3 is inserted in the connecting means 7 of the boom 6 when the boom 6 has to be hoisted up to a stowed and rest position. The cable 3 is extracted from the connecting means 7 of the boom 6 when said cable 3 has to be made free to operate a refuelling operation.

The connecting means 7 of the boom 6 will preferably be a toroidal shape ring that holds the limit device 4 in the end of the cable 3 in the boom 6. The material of the connecting means 7 can be Nitinol or similar, therefore allowing the connecting means 7 to open when current passes through the material of said connecting means 7, allowing the limit device 4 to be introduced in the boom 6. When the current stops passing through the material of the connecting means 7, said connecting means 7 are closed, therefore maintaining the limit device 4 inside the boom 6 in a secure way.

The connecting means 7 can also comprise a security bolt (not shown) for securing the boom to the tanker aircraft when it has to land or to rest at a non operational status.

The system can also comprise an auxiliary camera (not shown) to supervise all the boom 6 and cable 3 contact operations.

The lifting and lowering device 14 of the system of the invention comprises a platform 15, driving means 16, torque limiting devices 17, transmission means 8, a holding device 18 and a rolling drum 9. The driving means 16 will preferably be electric motors and the transmission means 8 will preferably be wheels.

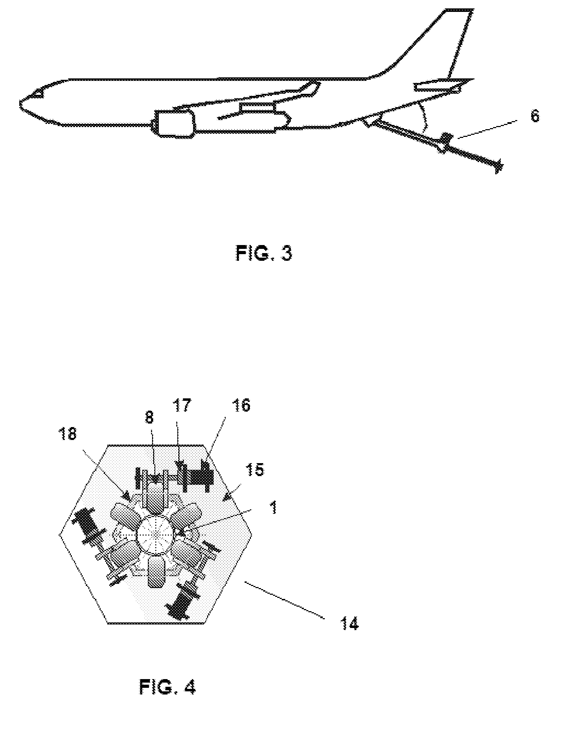

The transmission means 8 are preferably arranged forming an hexagonal set, as it can be seen in Figure 4. These transmission means 8 make contact directly with the duct 1, moving said duct 1 up and down, therefore moving up and down the chain 2 and the cable 3 during refuelling operations.

The driving means 16 are in charge of moving the transmission means 8 that move the duct 1 and the cable 3 in the system according to the invention. These driving means 16 release the chain 2 at a high strength and making it move very slowly, thanks to the torque limiting devices 17, attached to each of the driving means 16. The duct 1 pushes the limit device 4, therefore tightening the cable 3 and lowering it.

The platform 15 has preferably an hexagonal shape, as it can be seen in Figure 4, holding the components of the lifting and lowering device 14. Said device 14 also comprises a holding device 18 that holds together the transmission means 8 and the duct 1. The holding device 18 will preferably have an hexagonal shape (Figure 4), varying its apothem, preferably with the heat produced by electricity, to change the friction force effected by the transmission means 8 to the duct 1.

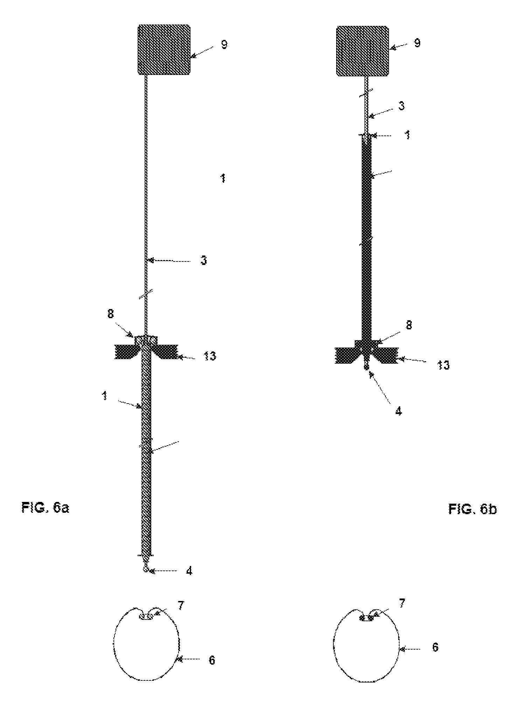

The lifting and lowering device 14 also comprises a rolling drum 9, where the cable 3 is rolled (Figures 6a and 6b).

In Figure 4, it can be seen the duct 1 with the chain 2 and the cable 3 inside it, moved by the transmission means 8 and passing through the aircraft fuselage 13 to hook the limit device 4, preferably made of steel, inside the connecting means 7 of the boom 6.

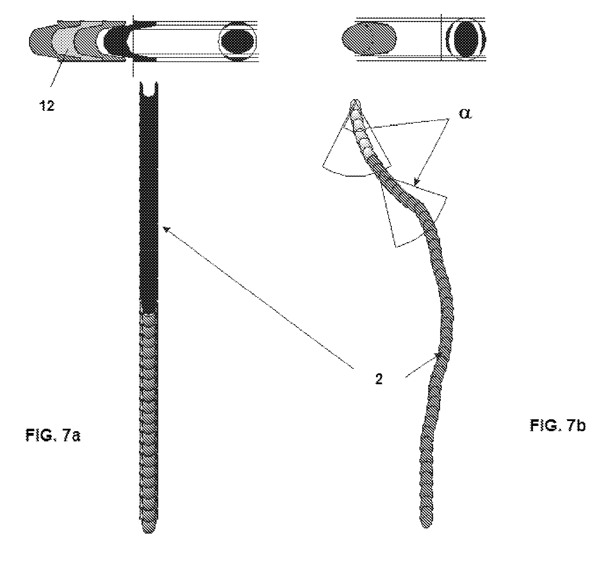

Figures 7a and 7b show the approximate shape of the links 12 of the chain 2. Figure 7a shows a lateral view, while Figure 7b shows a top view. It can also be seen that the chain 2 favors a certain bending α of the linking device 5 outside the plane comprising the longitudinal axis of the aircraft and the boom 6 for absorbing lateral movements of the cited boom 6, substantially restricting the movement of said linking device 5 in the above-mentioned plane for facilitating the connection of the linking device 5 to the boom 6 When the linking device 5 is placed vertically and the limit device 4 is connected to the connecting means 7 of the boom 6, this structure avoids the aerodynamic effect, while permits lateral hits from the boom 6 without been affected. The rigidity of the chain 2 in one direction is necessary for connecting easily the limit device 4 in the connecting means 7 of the boom 6, and also for absorbing the possible lateral movements of the boom 6.

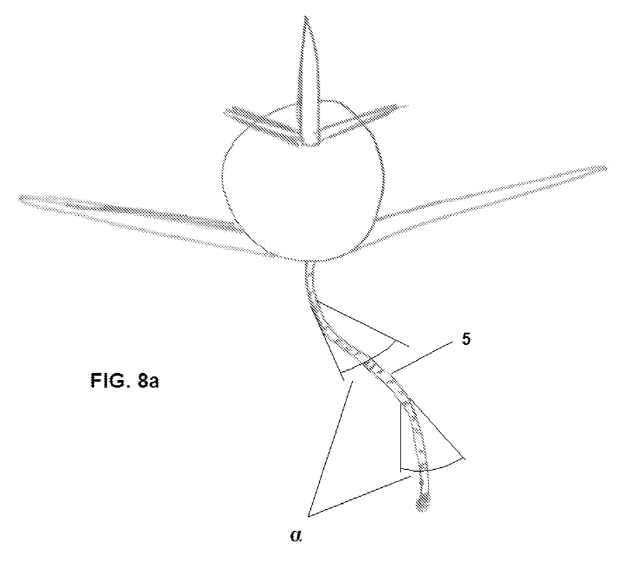

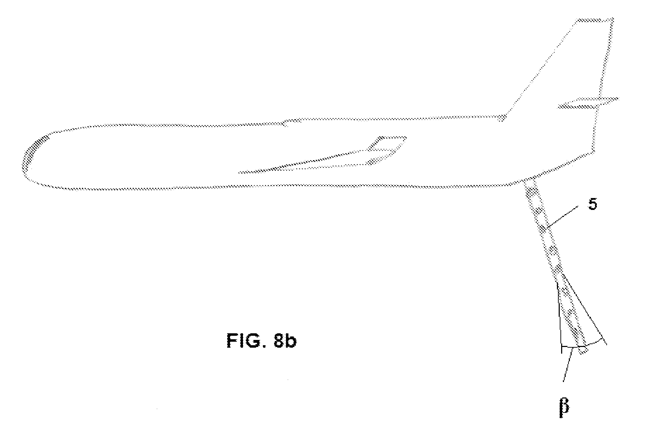

As it can be seen in Figures 8a and 8b, the bending α of the linking device 5 outside the plane comprising the longitudinal axis of the aircraft and the boom 6 for absorbing lateral movements of the cited boom 6 can be relatively high with no restriction (Figure 8a), whilst the movement of the linking device in the above-mentioned plane is substantially restricted up to an extent β, therefore facilitating the connection of the linking device 5 to the boom 6 (Figure 8b).

The invention also describes a method for operating such a system, based on a cable-free flying method. The system according to the invention operates following this steps:
a) when the tanker aircraft takes off, for example, the boom 6 is hoisted at its rest position, with the limit device 4 being located at the end of the cable 3, and being also linked to the connecting means 7 of the boom 6;
b) when the operation of the boom 6 is required, the boom 6 is lowered down to a position near or in the area where the boom 6 is able to fly freely, as it has been represented in Figure 3: this is accomplished by moving down the duct 1 that pulls the synchronized drum 9, therefore releasing in synchronization the cable 3, being the boom 6 released by the opening of the connecting means 7; the cable 3 can be pulled up, therefore lifting the linking device 5 to a position where no aerodynamic resistance is opposed, for refuelling normal operations;
c) once the appropriated refuelling operations have been finished, the boom 6 must be secured to a position close to the aircraft fuselage 13: firstly, the duct 1 is lowered down again, placing the cable 3 to its lowest position; then, the boom 6 is flied up until the limit device 4 contacts the end of the cable 3.

Another characteristic of the system according to the invention is that the boom 6 can be lowered down together with the linking device 5, being the refuelling operation done after that according to the known art.

Although the present invention has been fully described in connection with preferred embodiments, it is evident that modifications may be introduced within the scope thereof, not considering this as limited by these embodiments, but by the contents of the following claims.

## Claims

1. System for hoisting and releasing an aircraft refuelling boom (6) at in flight refuelling operations between a tanker aircraft and a receptor aircraft comprising a linking device (5) connectable to the boom (6), and a lifting and lowering device (14) for operating the linking device (5) and therefore the boom (6) such that, when refuelling operations have to take place, the boom (6) is lowered down by the lifting and lowering device (14), **characterized in that** said linking device (5) comprises connecting means (7) able to disconnect the boom (6) from the linking device (5), thereby allowing a free-flying boom refuelling operation, said connecting means (7) being also able to connect said boom (6) to the linking device (5), thereby facilitating the lifting of the boom (6).

2. System for hoisting and releasing an aircraft refuelling boom (6) at in flight refuelling operations according to claim 1 **characterized in that** the linking device (5) comprises a cable (3) and a limit device (4) located at one of the ends of said cable (3).

3. System for hoisting and releasing an aircraft refuelling boom (6) at in flight refuelling operations according to claim 2 **characterized in that** the linking device (5) also comprises a duct (1) through which passes the cable (3).

4. System for hoisting and releasing an aircraft refuelling boom (6) at in flight refuelling operations according to claims 2 or 3 **characterized in that** the linking device (5) also comprises a chain (2), the cable (3) passing through a hole in said chain (2)

5. System for hoisting and releasing an aircraft refuelling boom (6) at in flight refuelling operations according to claims 3 or 4 **characterized in that** the duct (1) is made of plastic.

6. System for hoisting and releasing an aircraft refuelling boom (6) at in flight refuelling operations according to any of claims 3, 4 or 5 **characterized in that** the duct (1) is a cylindrical tube.

7. System for hoisting and releasing an aircraft refuelling boom (6) at in flight refuelling operations according to any of the previous claims **characterized in that** bending of the linking device (5) is substantially restricted in the plane comprising the longitudinal axis of the aircraft and the boom (6), for facilitating to be connected to the boom (6), being the bending of said linking device (5) favoured outside of said plane for absorbing lateral movements of the boom (6).

8. System for hoisting and releasing an aircraft refuelling boom (6) at in flight refuelling operations according to any of the previous claims **characterized in that** the lifting and lowering device (14) comprises driving means (16) and transmission means (8) moved by said driving means (16), for operating the linking device (5).

9. System for hoisting and releasing an aircraft refuelling boom (6) at in flight refuelling operations according to claim 6 **characterized in that** the transmission means (8) are wheels and the driving means (16) are motors.

10. System for hoisting and releasing an aircraft refuelling boom (6) at in flight refuelling operations according to claim 9 **characterized in that** the lifting and lowering device (14) also comprises torque limiting devices (17) for operating the linking device (5) at a low speed.

11. System for hoisting and releasing an aircraft refuelling boom (6) at in flight refuelling operations according to claims 9 or 10 **characterized in that** the lifting and lowering device (14) also comprises a holding device (18) for holding together the wheels (8) and the linking device (5).

12. An aircraft having a system for hoisting and releasing an aircraft refuelling boom (6) according to any of the preceding claims.

13. Method for performing in-flight refuelling operations between a tanker aircraft and a receptor aircraft, the tanker aircraft having a boom refuelling system comprising a linking device (5) connectable to the boom (6), **characterized in that** it comprises the following steps:
a) lowering down the linking device (5), therefore lowering the boom (6) to a position near or in the area where the boom is able to fly freely;
b) disconnecting the boom (6) from the linking device (5) for operating normal refuelling, and
c) lifting the boom (6) to a stowed position, once normal refuelling is finished.

14. Method for performing in-flight refuelling operations between a tanker aircraft and a receptor aircraft according to claim 13, **characterized in that** the step c) comprises the following steps:
a) lowering down the linking device (5);
b) connecting the boom (6) to the linking device (5) by the use of connecting means (7), and
c) lifting the linking device (5) and therefore the boom (6) to a stowed position, once normal refuelling is finished.
